# EUROPEAN PATENT SPECIFICATION

(11) **EP 3 113 582 B1**
(45) Date of publication and mention of the grant of the patent: **29.11.2017**
(21) Application number: 16177475.7
(22) Date of filing: 01.07.2016
(51) Int. Cl.: H05H 1/24, H05H 1/48, H05H 1/50, B01D 53/32

(54) **STABILIZED AND HOMOGENIZED SOURCE OF NON-THERMAL PLASMA**
STABILISIERTE UND HOMOGENISIERTE QUELLE VON NICHTTHERMISCHEM PLASMA
SOURCE DE PLASMA NON THERMIQUE STABILISÉE ET HOMOGÉNÉISÉE

(30) Priority: 01.07.2015 CZ 20150455
(43) Date of publication of application: 04.01.2017
(73) Proprietor: Ceské vysoké ucení technické v Praze, 16627 Praha 6 (CZ)
(72) Inventor: BÁLEK, Rudolf, 10000 Praha 10 (CZ)
(74) Representative: Kratochvil, Vaclav

(56) References cited:
- WO-A2-2014/071469
- CZ-B6- 303 615
- CZ-B6- 304 836
- MOON J-D ET AL: "SO2 AND CO GAS REMOVAL AND DISCHARGE CHARACTERISTICS OF A NONTHERMAL PLASMA REACTOR IN A CROSSED DC MAGNETIC FIELD", IEEE TRANSACTIONS ON INDUSTRY APPLICATIONS, IEEE SERVICE CENTER, PISCATAWAY, NJ, US, vol. 35, no. 5, October 1999 (1999-10), pages 1198-1204, XP000924274, ISSN: 0093-9994, DOI: 10.1109/28.793385

## Description

### Background of the Invention

Presented solution deals with a source of non-thermal plasma, which provides stabilization, homogenization and increased volume of electrical discharge between coaxial electrodes by means of the simultaneous action of both the acoustic and magnetic fields at atmospheric pressure.

### Description of Prior Art

Discharges in the air at atmospheric pressure are the source of electrons, positive and negative ions, oxygen atoms, active oxygen particles, such as excited molecules and atoms, they produce ozone, highly reactive radicals or electromagnetic radiation with various wavelengths. Each of these products may subsequently be used for starting the reactions leading to desired aims, for example bacteria inactivation, change of chemical composition of gaseous mixture or surface treatment. Plasma properties may be modified by the discharge type and its parameters. These parameters can be optimized by multiple aspects, such as catalysts or external fields.

For practical applications, it is suitable to run the discharge in the greatest possible volumes while reaching maximum supplied energy, which can be achieved by using e.g. multi-electrode discharges. This requires to solve the issue of the discharge thermal stability. A suitable temperature of the discharge and the discharge electrodes is often maintained by cooling with gas flowing to the discharge. A cooling gas, however, dilutes the processed gas and shortens the time the reactants are able to spend within the discharge zone, which results in lower efficiency of the mentioned processes. In addition, each of the electrodes, usually needles or blades, must have its own ballast resistor to at least partially eliminate the discharge burning only on one blade, the blade with the highest electric field gradient. This to a large extent complicates the device design due to the electric isolation of connections to the individual electrodes and due to large dimensions of high-voltage ballast resistors.

Discharge volume from a single needle may be enhanced by suitable application of acoustic waves. In one known solution, the discharge is enhanced between multi-needle electrode and plane electrode where the needles are located in the acoustic pressure node and simultaneously in the plane perpendicular to such node in the acoustic resonator, as described in the patent CZ301823. In this design, the described plane electrode does not allow symmetrical and abundant filling of the resonators inner space.

The design of a resonator where the discharge burns between multi-needle electrodes at a distance λ/4 from sliding reflector and wire electrode located in the resonator axis is described in the patent CZ303615. In an advantageous embodiment where the multi-needle electrodes are located around the perimeter of the cylindrical resonator symmetrically to the plane of the acoustic pressure node, the discharge fills up the cylindrical resonator volume rather intensively. The setback is that each multi-needle electrode must be equipped with its own ballast resistor and that between the tips of needle electrodes, from which the discharge burns, is a space without any discharge. Also, all discharge current passes through the tips of needle electrodes, which are exposed to high current densities.

The main setback of all designs described so far is that in order to achieve great acoustic displacements in the environment, or in other words high acoustic velocities in the space of discharge electrodes needed to disperse and stabilize the discharge, high acoustic pressures reaching up to several thousand Pa must be created in each resonator. As a result, the resonators produce intensive noise, which especially in the case of low-frequencies resonators is difficult and expensive to eliminate. Dimensions of acoustic resonators required to meet the resonation conditions are also great, typically one half of the acoustic wave length.

Setbacks mentioned above are removed by a device with acoustically stabilized electric discharge as described in CZ304836. This device is formed by cylindrical discharge chamber with an inlet and an outlet of processed gas. In the discharge chamber there is located a grounded conductive wire electrode connected with one potential and the second electrode connected with the opposite potential, while its center is located in the center of the discharge chamber, it means in the acoustic pressure node. The grounded conductive wire electrode is electrically connected to the grounding conductor outside the discharge chamber and it is formed by a conductor with circular cross-section located in parallel with the axis of the cylindrical discharge chamber. The center of the grounded conductive wire electrode is placed against the center of the second electrode. The second electrode is a knife-edge electrode located in parallel with the axis of the cylindrical discharge chamber and it is situated symmetrically opposite the center of the grounded conductive wire electrode and is electrically connected via a resistor to a high voltage source. The principle of this solution is that sources of acoustic field are attached to the both ends of the discharge chamber. Both sources are connected out of phase via amplifiers to the output of the generator. In an advantageous embodiment, the conductor with circular cross-section is located in the axis of the cylindrical discharge chamber, it means in the place equally distant from the knife-blade electrode. In another embodiment, an arbitrary number of additional knife-blade electrodes may be located around the inner perimeter of the cylindrical discharge chamber symmetrically to the plane of the acoustic pressure node. Their edges distances from the grounded conductive wire electrode are equal. Each such additional knife-blade electrode is connected to the high voltage source via individual resistors. The great advantage is that the acoustic waves in this arrangement stabilize the discharges so that they burn along the full length of the knife-blade electrode edge.

In the arrangement when the cylindrical discharge chamber forms one electrode and when the knife-blade electrode is replaced by a thin wire in the cylindrical discharge axis, the discharge is actually stabilized and cooled, however, the device is rather sensitive to the precise placement of the wire electrode in the axis of the cylindrical electrode. If even the slightest displacement of the wire electrode from the axis occurs, the discharge burns only in the segment of the discharge zone where the distance between electrodes is the shortest and where therefore the electric field gradient is the highest.

The document: Jae-Duk Moon et al, "SO2 and CO Gas Removal and Discharge Characteristics of a Nonthermal Plasma Reactor in a Crossed DC Magnetic Field", IEEE TRANSACTIONS ON INDUSTRY APPLICATIONS, VOL.35, NO.5, September/ October 1999, discloses a non thermal plasma reactor in a crossed DC magnetic field.

### Summary of the Invention

Setbacks mentioned above are removed by a stabilized and homogenized source of non-thermal plasma formed by a cylindrical discharge chamber, while its wall, made of conductive and non-magnetic material, is grounded by grounding conductor. In the axis of this discharge chamber is located an electrically conductive non-magnetic wire electrode with a circular cross-section, which is via the ballast resistor connected to the terminal of the direct current high voltage source. To both sides of the discharge chamber are attached the first and the second acoustic sources, while each of them is formed by an acoustic waveguide connected via a cross-section reducer to the acoustic driver, and these acoustic drivers are connected with the opposite phase. The principle of the new solution is that the discharge chamber is attached to the first acoustic source via electrically non-conductive first cylindrical extension equipped in its casing with the gas outlet and to the second acoustic source via electrically non-conductive second cylindrical extension equipped in its casing with the gas inlet. Both cylindrical extensions are with one end partially inserted into the discharge chamber. The position of the ends of wire electrode is fixed to their walls. The discharge chamber, in its full length, is located inside at least one permanent toroid magnet oriented in such a way that the magnetic induction vector of the field created by such at least one permanent toroid magnet is inside the discharge chamber in parallel with its axis and it is perpendicular to the current density vector formed by the discharge oriented radially between the inner wall of the discharge chamber and the wire electrode. The length of the wire electrode extends the edges of the discharge chamber. Active part of the wire electrode along which the discharge is spread is located in the axis of the discharge chamber symmetrically to the plane of the acoustic pressure node has its center in the middle of this discharge chamber and its active length, equal to twice the amplitude of acoustic displacement induced by the acoustic field, is the same as the length of the discharge chamber minus the sum of lengths of the first and the second extensions inserted into the discharge chamber.

To allow visualization of the discharge, it is advantageous, if the first and the second extensions are made of transparent material.

The result of this solution is a stabilized and homogenized discharge throughout the volume of the discharge chamber limited by the active length of electrodes located in parallel one over the other. Very advantageous aspect is that the magnetic field provides homogenization and the acoustic field of this arrangement stabilizes both the corona and streamer discharges so that they burn evenly in the full volume inside the discharge chamber between the both electrodes. Simultaneously, the arrangement cools down the wire discharge electrode and does not dilute the processed gas unlike the solution described e.g. in JP57192721 (A)-1982-11-26. The inlet of processed gas on one side of the discharge chamber and the gas outlet on the other side ensure that all processed gas must pass through the discharge volume, where any dead volume, it means the space without discharge, is completely eliminated.

### Explanation of Drawings

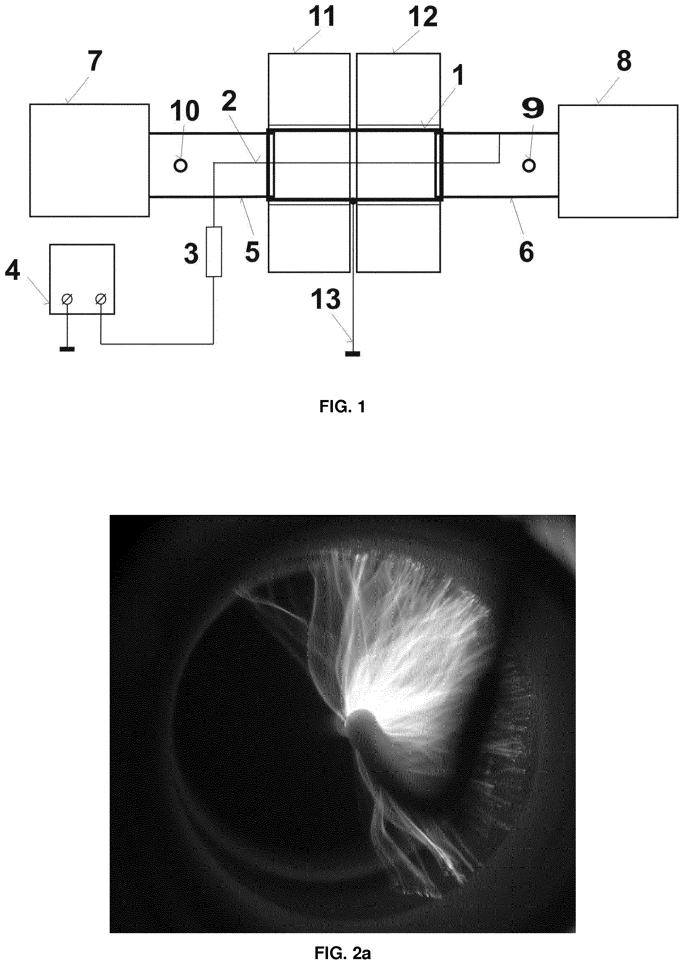

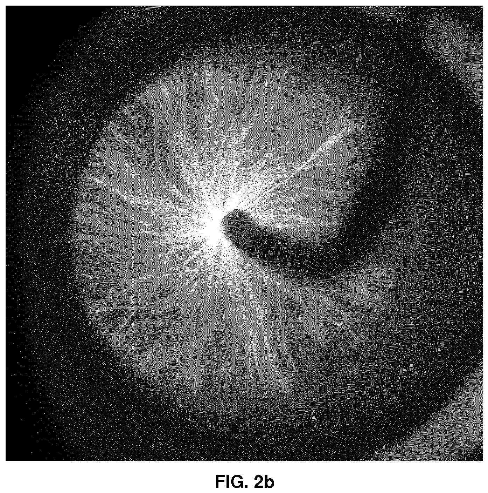

An embodiment example of the source of plasma with acoustic stabilization and magnetic homogenization of the discharge between the wire electrode and grounded cylindrical electrode forming the body of the discharge chamber inserted into toroid permanent magnets is schematically shown in the Fig. 1. Fig. 2a shows a picture of streamer discharges between the wire electrode and cylindrical electrode when only acoustic stabilization is involved, while Fig. 2b shows the effects of both the acoustic stabilization and the magnetic homogenization. Fig. 2a and 2b show angled view into the inner space of the discharge chamber through the electrically non-conductive and also transparent extensions - to allow visualization. The acoustic field frequency is 100 Hz and the maximum direct current voltage between the electrodes is 25 kV.

The mechanism of stabilization and homogenization of the discharge is based on the simultaneous action of the acoustic and magnetic fields. It exploits both the acoustic displacement and the acoustic velocity, with which the discharge environment shifts with the period of the acoustic wave against the plane of the acoustic pressure node so that the pressure changes create periodically changing less and more dense places occurring anti-symmetrically in both semi-spaces located against the plane of the pressure node.

### Detailed Description of the Preferred Embodiments

Stabilized and homogenized source of non-thermal plasma in Fig. 1 is formed by the cylindrical discharge chamber 1 realized by electrically conductive tube made of non-magnetic material, which forms one electrode of the discharge system connected by the grounding conductor 13 to the grounding potential. Into this discharge chamber 1 is inserted the first electrically non-conductive extension 5 from one side, which is connected to the first acoustic source 7, and symmetrically to it, from the other side, the second electrically non-conductive extension 6 is inserted into the discharge chamber 1, and this second electrically non-conductive extension 6 is connected to the second acoustic source 8. In this example, the toroid permanent magnets 11 and 12 are slipped over the discharge chamber 1, their number is arbitrary and given by the length of the discharge chamber 1. In the center of the discharge chamber 1 is located the center of the conductive wire electrode 2, hereinafter referred to only as the wire electrode 2, which is connected outside the discharge chamber 1 via the ballast resistor 3 to the high voltage source 4. This wire electrode 2 is located in the axis of the cylindrical discharge chamber 1 symmetrically to the plane of the acoustic pressure node. The wire electrode 2 is formed by a conductor with circular cross-section made of non-magnetic material and its active length is the same as the length of the discharge chamber 1 minus the lengths of inserted sections of the electrically non-conductive first extension 5 and the electrically non-conductive second extension 6 into the discharge chamber 1, and simultaneously the length of the active part of the wire electrode 2 is equal to double of the amplitude of acoustic displacement created by the acoustic field inside the discharge chamber 1. The center of this active part, it means the center of the wire electrode 2, lies in the middle of the discharge chamber 1. Parts of the wire electrode 2, outside its active length, for instance those perpendicular to the axis of the discharge chamber 1, have only the function to lead the electrode out from the discharge chamber 1 and fix it mechanically. The length of the wire electrode 2 conductor in the axis of the discharge chamber 1 is greater than the length of the discharge chamber 1 and its cross-section is given by the requirements for the current density of the discharge. Input and output of the processed gas are formed by the inlet 9 and the outlet 10 leading through the electrically non-conductive extensions at the opposite sides of the discharge chamber 1.

The action principle of the described stabilized and homogenized source of non-thermal plasma is that the electrical discharge created as a result of high voltage brought via ballast resistor 3 from the terminal of high voltage source 4 to the wire electrode 2 and burning between the wire electrode 2 and the inside of the discharge chamber 1 is thermally cooled down by the acoustic wave. The environment where the electrical discharge burns is modified by the acoustic wave with velocity, which in the direction perpendicular to the plane of the acoustic pressure node is the greatest, and in each half-period it changes its direction to the opposite one. As a result of the acoustic deflection, the heated zone is moved in the direction of the deflection. In the heated zone, the gas gets diluted, it means the pressure decreases, and in accordance with the Meek's criterion, the conditions more suitable for discharge are created. Therefore, the discharge travels in the direction of the discharge chamber 1 axis. Simultaneously, the ionized particles of the discharge traveling in perpendicular direction to the vector of the magnetic induction are exposed to the action of the Lorentz force, which creates spiral curvature and substantial enhancement of their trajectory between the electrodes formed by the discharge chamber 1 and the wire electrode 2, and therefore to substantially lower demands for exact center alignment of the wire electrode 2 against the electrode formed by the inner wall of the discharge chamber 1. The result is a stabilized and homogenized discharge in the full volume of the discharge chamber 1 limited by the overlapping lengths of part of the discharge chamber 1 and the wire electrode 2. This leads to a synergy of actions of the acoustic and magnetic fields to the discharge.

Fig. 2a shows a picture of streamer discharge between the negative wire electrode 2 and the inner wall of the discharge chamber 1 without exposure to the magnetic field at the frequency of the acoustic field 100 Hz and constant direct current voltage up to 25 kV. Fig. 2b shows the discharge under the same acoustic and electric conditions with the exposure to the magnetic field of three toroid permanent magnets creating the magnetic field with the induction 300 mT in the discharge chamber axis. In Fig. 2a it is apparent that without the action of the magnetic field, the discharge is occurring only in the limited segment of the discharge chamber volume.

For the purposes of studying the discharge behavior affected by the interaction of the discharge with oscillations of the acoustic field in the discharge zone, an experimental device was created as described by the diagram in Fig. 1. In this arrangement, the distance between the wire electrode 2 with the conductor diameter 0.1 mm and the inner diameter of the discharge chamber 1 was 10 mm. The acoustic wave was excited by the electroacoustic drivers BC 6MD38-8 from the generator Agilent 33250A and its power was amplified by the amplifier Mackie M 1400.

### Industrial Applicability

The presented solution deals with a device, which provides stabilization, homogenization and enhanced volume of various types of electrical discharges between coaxial electrodes by means of simultaneous action of acoustic and magnetic fields at atmospheric pressure. The source is designed to generate highly reactive particles with application potential in medicine, e.g. inactivation of infectious agents, in environmental applications e.g. decomposition of volatile organic compounds and surface treatment applications.

## Claims

1. A stabilized and homogenized source of non-thermal plasma comprising
a cylindrical discharge chamber (1) with a wall made of a conductive and non-magnetic material, which is grounded by a grounding conductor (13); an electrically conductive non-magnetic wire electrode (2) which is located on the axis of the discharge chamber (1); a ballast resistor (3); a direct current high voltage source (4); wherein the wire electrode (2) is via the ballast resistor (3) connected to a terminal of the voltage source (4), **characterised by**: a first acoustic source (7) and a second acoustic source (8), wherein each of them is formed by an acoustic waveguide attached by a cross-section reducer to an acoustic driver, wherein these acoustic drivers are configured to be driven in phase opposition, wherein the discharge chamber (1) is attached to the first acoustic source (7) via an electrically non-conductive first cylindrical extension (5) equipped in its casing with a gas outlet (10), and to the second acoustic source (8) via an electrically non-conductive second cylindrical extension (6) equipped in its casing with a gas inlet (9), wherein the first cylindrical extension (5) and the second cylindrical extension (6) are each with one end partially inserted into the discharge chamber (1) and where ends of the wire electrode (2) are fixed to the walls of the first and second cylindrical extensions, at least one permanent toroid magnet (11, 12) wherein the discharge chamber (1), in its full length, is located inside the at least one permanent toroid magnet (11, 12) which is oriented in such a way that the magnetic induction vector of the field created by said at least one permanent toroid magnet (11, 12) inside the discharge chamber (1) is oriented in parallel with the axis of the chamber and is perpendicular to the current density vector formed by the discharge which is oriented radially between the cylindrical wall of the discharge chamber (1) and the wire electrode (2), and the length of the wire electrode (2) extends further over the edges of the discharge chamber (1), wherein the active part of the wire electrode (2) is located on the axis of the discharge chamber (1) symmetrically with respect to the transverse plane containing the central acoustic pressure node induced in operation by the acoustic field and located in the middle of the discharge chamber (1), and its active length, which is equal to twice the amplitude of the acoustic displacement induced in operation by the acoustic field, is the same as the length of the discharge chamber (1) minus the sum of the lengths of the first cylindrical extension and the second cylindrical extension parts inserted into the discharge chamber (1).

2. Stabilized and homogenized source of non-thermal plasma according to claim 1 **characterized by the fact that** the first extension (5) and the second extension (6) are made of transparent material.

## Patentansprüche

1. Stabilisierte und homogenisierte Quelle des nichtthermischen Plasmas, bestehend aus einer zylindrischen Entladungskammer (1), derer Wand von einem leitfähigen nichtmagnetischen Material durch einen Erdungsleiter (13) geerdet ist; in der Längsachse dieser Entladungskammer (1) ist eine elektrisch leitende nichtmagnetische Drahtelektrode (2) mit kreisförmigem Querschnitt ein Stabilisierungswiderstand (3); eine Klemme der DC-Hochspannungsquelle (4) angeordnet, wo sich die Drahtelektrode (2) befindet, die durch einen Stabilisierungswiderstand (3) an die Klemme der DC-Hochspannungsquelle (4) angeschlossen ist, **dadurch gekennzeichnet, dass** die erste Schallquelle (7) und die zweite Schallquelle (8), wobei jede davon aus einem über einen Durchschnittminderer an einen akustischen Wandler akustischen Wellenleiter, angeschlossen sind, wo diese akustischen Wandler in der Gegenphase verbunden sind, wo die Entladungskammer (1) an die erste Schallquelle (7) über einen elektrisch nicht leitenden ersten zylindrischen Aufsatz (5), der in seinem Mantel mit Gasabführung (10) versehen ist, und an die zweite Schallquelle (8) über einen elektrisch nicht leitenden zweiten zylindrischen Aufsatz (6), der in seinem Mantel mit Gasabführung (9) versehen angeknüpft sind, wo der erste zylindrische Aufsatz (5) sowie der zweite zylindrische Aufsatz (6) mit einem ihren Ende teilweise in die Entladungskammer (1) eingeleitet sind und wo zu ihrer Wand die Position der Enden der Drahtelektrode (2) befestigt ist, wobei die Entladungskammer (1) über ihre gesamte Länge innerhalb von wenigstens einem torodialen Permanentmagneten (11, 12) angeordnet ist, der so orientiert ist, dass der Vektor der magnetischen Induktion des durch diesen zumindest einen torodialen Permanentmagneten (11,12) gebildeten Felds innerhalb der Entladungskammer (1) parallel zu seiner Achse liegt und senkrecht zu dem Vektor der Stromdichte, gebildet durch die radial orientierte Entladung zwischen der Innenwand der Entladungskammer (1) und der Drahtelektrode (2) ist; ferner erstreckt sich die Länge der Drahtelektrode (2) über die Ränder der Entladungskammer (1), wobei ihr aktiver Teil, der symmetrisch in der Achse der Entladungskammer (1) zur Knotenebene des Schalldruckes liegt, sein Zentrum in der Mitte dieser Entladungskammer (1) hat und ihre aktive Länge, die dem Zweifachen der Amplitude des durch das akustische Feld angeregten Schallausschlags gleich ist, wird durch die Länge der Entladungskammer (1) gebildet, verkürzt um die Längensumme der Teile des ersten Aufsatztes (5) und des zweiten Aufsatzes (6), die in die Entladungskammer (1) eingeleitet sind.

2. Stabilisierte und homogenisierte Quelle des nichtthermischen Plasmas nach dem Anspruch 1, **dadurch gekennzeichnet, dass** der erste Aufsatz (5) und der zweite Aufsatz (6) aus transparentem Material bestehen.

## Revendications

1. La source stabilisée et homogénéisée du plasma non thermique constituée d'une chambre de décharge (1) cylindrique dont la paroi en matériau conducteur et non magnétique est mise à la terre à l'aide d'un conducteur de terre (13), une fil-électrode (2) conductrice en fil non magnétique de section circulaire, une résistance de stabilisation (3), une borne de source de haute tension continue (4) sont placées dans l'axe longitudinal de la chambre de décharge (1), où se trouve le fil-électrode (2) reliée à la borne de la source de haute tension continue (4) à travers la résistance de stabilisation (3), **caractérisé en ce que** la première source acoustique (7) et la deuxième source acoustique (8), chacune étant constituée d'un guide d'ondes acoustiques relié à travers une réduction de section au transducteur acoustique, où les transducteurs acoustiques sont connectés en opposition de phase, où la chambre de décharge (1) est reliée à la première source acoustique (7) à travers une première rallonge cylindrique électriquement non conductrice (5), munie dans son enveloppe d'une évacuation (10) de gaz, et à la deuxième source acoustique (8) à travers la deuxième rallonge cylindrique (6) électriquement non conductrice, munie dans son enveloppe de l'arrivé de gaz (9), où une extrémité de la première rallonge cylindrique (5) et une extrémité de la deuxième rallonge cylindrique (6) sont partiellement introduites dans la chambre à décharge (1) et où la position des extrémités du fil-électrode (2) est fixée à leur paroi, la chambre de décharge (1) étant placée sur toute sa longueur dans au moins un aimant toroïdal permanent (11, 12) orientée de telle sorte que le vecteur de champ d'induction magnétique produit au moins par un aimant toroïdal permanent (11,12) soit à l'intérieur de la chambre de décharge (1) parallèle à son axe et perpendiculaire au vecteur de densité de courant crée par la décharge orientée radialement entre la paroi intérieure de la chambre de décharge (1) et le fil-électrode (2), et la longueur du fil-électrode (2) dépasse les bords de la chambre de décharge (1), sa partie active , dans l'axe de la chambre de décharge (1) étant symétrique par rapport au plan d'un noeud de pression acoustique, a son centre au centre de cette chambre de décharge (1) et sa longueur active égale au double de l'amplitude de la déviation acoustique excitée par le champ magnétique étant formée par la longueur de la chambre de décharge (1) diminuée de la somme des longueurs des parties de la première rallonge (5) et de la deuxième rallonge (6) introduites dans la chambre de décharge (1).

2. La source stabilisée et homogénéisée du plasma non thermique selon la revendication 1 **caractérisé en ce que** la première rallonge (5) et la deuxième rallonge (6) sont en matériau transparent.
